# EUROPÄISCHE PATENTSCHRIFT

(11) **EP 2 088 400 B1**
(45) Veröffentlichungstag und Bekanntmachung des Hinweises auf die Patenterteilung: **14.01.2015**
(21) Anmeldenummer: 08105884.4
(22) Anmeldetag: 28.11.2008
(51) Int. Cl.: G01D 11/28

(54) **Unterflurzeiger mit passivem Leuchtkörper**
Subsurface indicator with passive light body
Indicateur d'encastrement doté d'un corps d'éclairage passif

(30) Priorität: 11.02.2008 DE 102008008531
(43) Veröffentlichungstag der Anmeldung: 12.08.2009
(73) Patentinhaber: ROBERT BOSCH GMBH, 70442 Stuttgart (DE)
(72) Erfinder: Herzog, Bernhard, 70619 Stuttgart (DE); Mezger, Siegfried, 70563 Stuttgart (DE); Dagenbach, Stefan, 75428 Illingen (DE); Borsdorf, Uwe, 71640 Ludwigsburg (DE); Ernst, Waldemar, 71665 Vaihingen/Enz (DE); Schach, Harald, 71287 Weissach (DE); Kirschbaum, Axel, 75417 Muehlacker (DE)

(56) Entgegenhaltungen:
- EP-A- 1 843 180
- WO-A-2007/042322

## Beschreibung

Die vorliegende Erfindung betrifft eine Anzeigevorrichtung nach dem Oberbegriff des Anspruchs 1.

### Stand der Technik

Aus einer nicht veröffentlichten Anmeldung des gleichen Anmelders ist eine Anzeigevorrichtung für ein Kraftfahrzeug, mit zwei in verschiedenen Ebenen schwenkbeweglich angeordneten Zeigern bekannt, wobei zwischen einem vorderen Zeiger und einem hinteren Zeiger zumindest ein Zifferblatt derart angeordnet ist, dass der hintere Zeiger von dem Zifferblatt zumindest abschnittsweise abgedeckt ist und die Anzeigevorrichtung ein dem hinteren Zeiger zugeordneten Leuchtkörper aufweist. Bei diesem Beleuchtungsmittel handelt es sich um eine aktiv schaltbare, auf dem "Unterflurzeiger" angeordnete und mit entsprechend elektrischen Zuleitungen versehene Lichtquelle. Sowohl der Aufwand für die Bereitstellung der Zuleitung zur Versorgung dieser Lichtquelle als auch die Kontaktierung bei der Montage des Unterflurzeigers werden als nachteilig angesehen.

Im Weiteren beschreibt die DE 102 22 503 A1 einen Zeiger mit einer Lichtführungseinheit, bei der eine homogene Beleuchtung einer Zeigerfahne vorgesehen ist. Die Lichteinspeisung erfolgt durch Positionierung einer Lichteinkoppelstelle des Zeigers gegenüber einem Abstrahlbereich einer als Leuchtdiode ausgebildeten Lichtquelle. Um den Zeiger an verschiedenen Drehpositionen um seine Zeigerachse leuchten lassen zu können, sind mehrere solche Lichtquellen um die Achse des Zeigers herum auf einer Kreisbahn angeordnet verteilt positioniert. Der Zeiger kann daher nur an den entsprechenden Auslenkungswinkeln mit Licht versorgt und dargestellt werden, an denen der Einkoppelfläche des Lichtleitelementes eine Lichtquelle gegenüberliegend angeordnet ist.

Aus der WO 2007/04322 A1 ist eine Anzeigevorrichtung für ein Kraftfahrzeug mit einem einen ersten und/oder einen zweiten Lichtleiterbereich aufweisenden, schwenkbaren Zeiger bekannt. Der Zeiger ist aus einem durchsichtigen Material hergestellt. In den Zeiger kann Licht von einer auf einer Leiterplatte angeordneten Beleuchtungseinrichtung eingekoppelt werden. Der Zeiger ist dabei hinter einem Anzeigebereich angeordnet, der beispielsweise als ein Zifferblatt ausgeführt sein kann.

Aus der EP 1843180 A1 ist eine Beleuchtungseinrichtung bekannt, bei der Licht in eine stationäre Lichtleiterplatte eingekoppelt wird.

### Aufgabe und Vorteile der vorliegenden Erfindung

Der vorliegenden Erfindung liegt die Aufgabe zugrunde, eine Anzeigevorrichtung entsprechend der einleitend dargelegten Art zu verbessern.

Die Lösung dieser Aufgabe erfolgt ausgehend vom Oberbegriff des Anspruchs 1 durch dessen kennzeichnende Merkmale.

In den Unteransprüchen sind vorteilhafte und zweckmäßige Weiterbildungen angegeben.

Dementsprechend betrifft die vorliegende Erfindung eine Anzeigevorrichtung für ein Fahrzeug, mit einem Zifferblatt und einem in Draufsicht auf die Anzeigevorrichtung in einer hinter dem Zifferblatt liegenden Ebene angeordneten Zeiger, einem sogenannten Unterflurzeiger, sowie einem am Zeiger angeordneten und sich mit ihm mitbewegenden Leuchtkörper. Erfindungsgemäß ist ein Lichtleitkörper zur Weiterleitung von Licht aus einer stationären Lichtquelle vorgesehen. Durch diese Anordnung ist es in vorteilhafter Weise möglich, mittels einer ortsfest angeordneten Lichtquelle einen sich in Bezug auf das Zifferblatt in einer beliebigen Winkelauslenkung mit dem Zeiger mit bewegenden Leuchtkörper mit Licht zu versorgen, bzw. ihn mit einem Lichtstrahl so zu beaufschlagen, dass dieser von einem Betrachter der Anzeigevorrichtung visuell erfasst werden kann.

Eine durch einen derartigen Lichtstrahl realisierte Anzeige, kann z.B. einen analogen Wert in Bezug auf das Zifferblatt der Anzeigevorrichtung darstellen, z.B. für eine Tempomatmarke oder dergleichen. Die Visualisierung dieses Wertes kann sowohl durch einen direkten als auch durch einen indirekten, z.B. durch Reflexion erzeugten Lichtaustritt in Richtung des Auges eines Betrachters der Anzeigevorrichtung erfolgen. Auch kombinierte Darstellungsarten durch direkt abgestrahltes und reflektiertes Licht ist möglich.

Unter einem Zifferblatt im Sinne der vorliegenden Erfindung sind alle zur Anzeige von Werten geeigneten Bezugsmittel zu verstehen, wie zum Beispiel ein Tacho, ein Drehzahlmesser oder eine andere, einen bestimmten Betriebsparameter eines Fahrzeugs anzeigende Einrichtungen. Die Anzeige der Werte kann hierbei in bevorzugter Weise durch Ziffern oder Zahlen erfolgen, denkbar sind aber auch alphanumerische oder jegliche andere Formen von Zeichen zur Symbolisierung des bzw. der betreffenden Werte eines oder gegebenenfalls auch mehrerer Fahrzeugparameter.

Der erfindungsgemäß zur Einspeisung von Licht in den Leuchtkörper vorgesehene Lichtleitkörper ist stationär angeordnet. Das heißt, er ist zumindest an einer bestimmten Stelle an einen festen Standort gebunden. In einer besonderen Ausführungsform kann sogar der gesamte Lichtleitkörper in Bezug auf ein Befestigungssystem der Anzeigevorrichtung fest angeordnet sein, zum Beispiel an einem Tragelement der Anzeigevorrichtung. Ein solches Tragelement könne beispielsweise eine Grundplatte oder Platine darstellen, an welcher weitere Elemente der Anzeigevorrichtung, insbesondere die Achse eines oder mehrerer Zeigerinstrumente sowie gegebenenfalls auch deren Antriebe befestigt sind.

Um aus dem stationär angeordneten Lichtleitkörper über den gesamten Anzeigebereich des Zifferblatts eine möglichst gleichmäßige Lichtstärke zur Speisung des mit dem Unterflurzeiger mit bewegten Lichtkörpers gewährleisten zu können, kann in einer weiter bevorzugten Ausführungsform der Lichtleitkörper ringförmig oder ringsegmentförmig ausgebildet sein und insbesondere vorteilhaft eine ebenfalls so ausgebildete Licht-Auskoppelfläche aufweisen.

Zur Einkopplung des von dem Lichtleitkörper abgegebenem Lichts in den Leuchtkörper kann der mit dem Unterflurzeiger sich mit bewegende Leuchtkörper eine dieser ringförmigen Struktur des Lichtleitkörpers sich zumindest über den wesentlichen Bereich der Anzeigevorrichtung zugewandte Licht-Aufnahmefläche aufweisen. Dadurch kann sicher gestellt werden, dass unabhängig von der Position des Unterflurzeigers in Bezug auf das Zifferblatt immer eine im wesentlichen gleichmäßige Lichteinstrahlung gewährleistet werden kann. In einer besonders bevorzugten Ausführung ist sogar eine um 360° drehbare Lichteinkopplung vorgesehen, so dass jede Position eines vollständigen Kreises hierdurch zur Anzeige gebracht werden kann.

Zur Visualisierung des betreffenden, durch den vom Unterflurzeiger darzustellenden Wertes kann der mit ihm mitbewegliche Leuchtkörper mit einer dem Zifferblatt und/oder einem Tubenring der Anzeigevorrichtung zugeordneten Licht-Auskoppelfläche versehen sein. Diese strahlt das von der vorzugsweise als LED ausgebildeten Lichtquelle erzeugte und über den Lichtleitkörper in den Leuchtkörper eingespeiste Licht so ab, dass es direkt und/oder indirekt vom Betrachter der Anzeigevorrichtung gesehen werden kann. Als Tubenring wird im Sinne der Erfindung der stirnseitig zum Zifferblatt angeordnete Bereich einer Anzeigevorrichtung verstanden.

Die Befestigung der beweglichen Ausführungsform des Lichtleitkörpers kann insbesondere vorteilhaft durch eine z.B. als Lager fungierende Aufnahme zur drehbaren Lagerung eines die ortsfest positionierte Licht-Einkoppelfläche aufweisenden Abschnitts des Lichtleitkörpers realisiert sein. Besonders vorteilhaft eignet sich hierzu z.B. eine hülsenförmige Aufnahme.

In einer besonders bevorzugten Ausführung kann diese Aufnahme auch exzentrisch zu einer Drehachse eines primären Zeigers der Anzeigevorrichtung angeordnet sein. Der primäre Zeiger der Anzeigevorrichtung kann z.B. zur Darstellung eines Geschwindigkeitswertes, eines Drehzahlwertes oder dergleichen mehr dienen.

Auch in dieser Ausführungsform kann der Leuchtkörper zur Darstellung des durch den Unterflurzeiger wiedergegebenen Wertes des betreffenden Betriebsparameters eine dem Zifferblatt und/oder dem Tubenring zugeordnete Lichtauskoppelfläche aufweisen, um so dem Betrachter der Anzeigevorrichtung den betreffenden Wert durch direkte und/oder indirekte Lichtabstrahlung anzuzeigen.

Die Kontur eines derartig abgegebenen Lichtstrahls weist in einer besonders bevorzugten Ausführungsform einen im wesentlichen punktförmigen Querschnitt auf, dessen geometrische Kontur z.B. ein runder oder ovaler Punkt, ein Dreieck, ein Rechteck, eine Raute oder dergleichen mehr im Unterschied zu einem im Wesentlichen vollständig ausgeleuchteten Zeiger ist.

Zur Vermeidung einer unerwünschten Anzeige eines gegebenenfalls gar nicht zur Anzeige vorgesehenen Wertes durch eine der oben beschriebenen Ausführungsformen kann in weiter vorteilhafter Weise eine Streulichtblende vorgesehen sein. Diese sorgt dafür, dass im Wesentlichen nur das von der stationär angeordneten Lichtquelle durch die Auskoppelfläche des sich mit dem Unterflurzeiger mit bewegenden Leuchtkörpers abgestrahlt wird und so vom Betrachter der Anzeigevorrichtung gesehen werden kann.

### Figurenbeschreibung

Verschiedene Ausführungsbeispiele der vorliegenden Erfindung werden nachfolgend unter Bezug auf die beigefügten Figuren näher erläutert.

### Es zeigen:

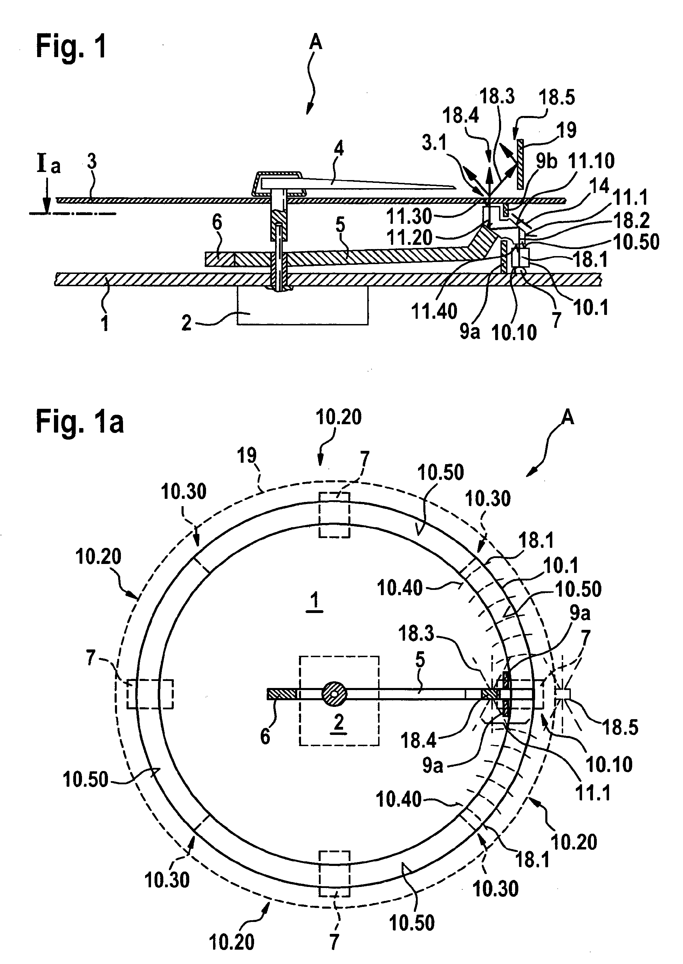

Die Fig. 1 bis 6b verschiedene Ausführungsformen von Anzeigevorrichtungen für ein Fahrzeug mit einem hinter einem Zifferblatt angeordneten Unterflurzeiger und an ihm angeordneten, passiven Leuchtkörper mit entsprechend ausgebildeten Lichtversorgungselementen.

Dementsprechend zeigt die Fig. 1 eine Anzeigevorrichtung A für ein Fahrzeug in einer Schnittdarstellung. Aufbauend auf einer Platine 1, z.B. als Trägerelement, umfasst dieses weiter einen Doppel-Zeigerantrieb 2 zum Antrieb zweier konzentrisch gelagerter Zeiger 4 und 5. Der Zeiger 5 ist als Unterflurzeiger ausgebildet und liegt in Draufsicht auf die Anzeigevorrichtung A betrachtet hinter einem Zifferblatt 3 angeordnet.

Um die Position des Unterflurzeigers sichtbar machen zu können, ist an diesem ein Leuchtkörper 11.1 so angeordnet, dass er sich mit diesem mitbewegen kann. Erfindungsgemäß ist ein stationär angeordneter Lichtleitkörper 10.1 zur Einkopplung eines von einer als LED ausgebildeten Lichtquelle 7 erzeugten Lichtstrahles 18 vorgesehen. Die Einkopplung des von der LED 7 erzeugten Lichtstrahls 18 erfolgt an einer am Lichtleitkörper 10 ausgebildeten, ortsfest positionierten Licht-Einkoppelfläche 10.10.

Um eine möglichst gleichmäßige Lichtverteilung über den gesamten Bewegungsbereich des Unterflurzeigers 5 ermöglichen zu können, ist der Lichtleitkörper 10 beispielhaft in dieser Ausführungsform als ringförmig ausgebildeter Körper 10.1 dargestellt (Fig. 1a). Hierin ist in der Draufsicht, entsprechend der Schnittlinie 1a in der Fig. 1, zusätzlich beispielhaft für eine weitere mögliche Ausführungsform der ringförmig ausgebildete Lichtleitkörper 10 durch gestrichelte Linien 10.30 segmentartig unterbrochen. Somit ergeben sich hier beispielhaft vier Ringabschnitte 10.20 als stationär angeordnete Lichtleitkörper 10 zur Einspeisung der von den ebenfalls hier beispielhaft und gestrichelt für den jeweiligen Ringabschnitt 10.20 dargestellten LEDs 7 eingestrahlten Lichtstrahlen 18.

Rein der Übersichtlichkeit halber ist nur für den rechten Ringabschnitt 10.20 als Lichtquelle die LED 7 aktiv geschaltet. Symbolisch sind hierzu von der Licht-Auskoppelfläche 10.50 des stationär angeordneten Lichtleitkörpers 10 abgehende Lichtstrahlen 18.1 dargestellt. Diese werden durch den in diesem Ausführungsbeispiel im äußeren Endbereich des Unterflurzeigers 5 angeordneten Leuchtkörpers 11 in axialer Richtung gesammelt und entsprechend der Darstellung in der Fig. 1 mittels zweier Umlenkflächen 11.10 und 11.20 als Lichtstrahlen 18.2 zur Lichtaustrittsfläche 11.30 geführt.

Von der Lichtaustrittsfläche 11.30 austretend durchdringen die Lichtstrahlen 18.3 das Zifferblatt 3 an der Position 3.1. Je nach gewünschter Darstellungsart des austretenden Lichtpunktes 18.4 (Fig. 1a) kann das Zifferblatt 3 in dem vorgesehenen Bereich entsprechend lichtdurchlässig ausgebildet sein. Die Kontur des austretenden Lichtes ist vorzugsweise punktförmig. Die geometrische Form des Punktes 18.4 kann in der Draufsicht z.B. punktförmig rund sein, dreieckig, rechteckig, quadratisch, rautenförmig oder dergleichen mehr.

Neben der Visualisierung dieses Lichtpunktes 18.4 direkt oder indirekt am Zifferblatt 3 kann der Zeiger gegebenenfalls auch über den Rand des Zifferblatts 3 hinausreichen und direkt in Richtung des Betrachters der Anzeigevorrichtung den von ihm entsprechend umgelenkten Lichtstrahl 18.3 abgeben.

In einer weiteren Ausführungsform ist es auch möglich, dass der von der Licht-Austrittsfläche 11.30 abstrahlende Lichtstrahl 18.3 zur Beleuchtung eines sog. "Tubenrings" 19 zur Darstellung eines analogen Anzeigewertes durch die entsprechende Anzeigevorrichtung vorgesehen ist. Rein der Vollständigkeit halber ist diesbezüglich in der Fig. 1a in gestrichelter Darstellung ein entsprechender Lichtpunkt 18.5 am Tubenring 19 symbolisch gezeigt.

Zur Reduzierung der Lichtverluste im Leuchtkörper 11 kann zur Erhöhung der Lichtreflexion an den Umlenkflächen 11.10 und 11.20 jeweils noch eine Verspiegelung vorgesehen sein, z.B. in der Form eines sog. "Vorsatzspiegels" 14. Dieser kann z.B. aus einer Alufolie oder einem anderen, das Reflexionsvermögen der Umlenkflächen verbesserten Material und/oder einer Vergütung der betreffenden Oberfläche realisiert sein.

Zur Vermeidung der Einkopplung von Streulicht, in den durch den Lichtpunkt 18.4 und/oder 18.5 realisierten Anzeigebereich, sind hier weiter beispielhaft zwei Elemente 9a und 9b einer Streulichtblende 9 dargestellt.

Um den Unterflurzeiger 5 möglichst frei von Fremdeinflüssen bewegen zu können, ist hier weiter beispielhaft an der dem Leuchtkörper 11 gegenüberliegenden Seite des Unterflurzeigers 5 ein Gegengewicht 6 vorgesehen. Hierdurch ist insbesondere auch die Behebung von Unwuchten möglich.

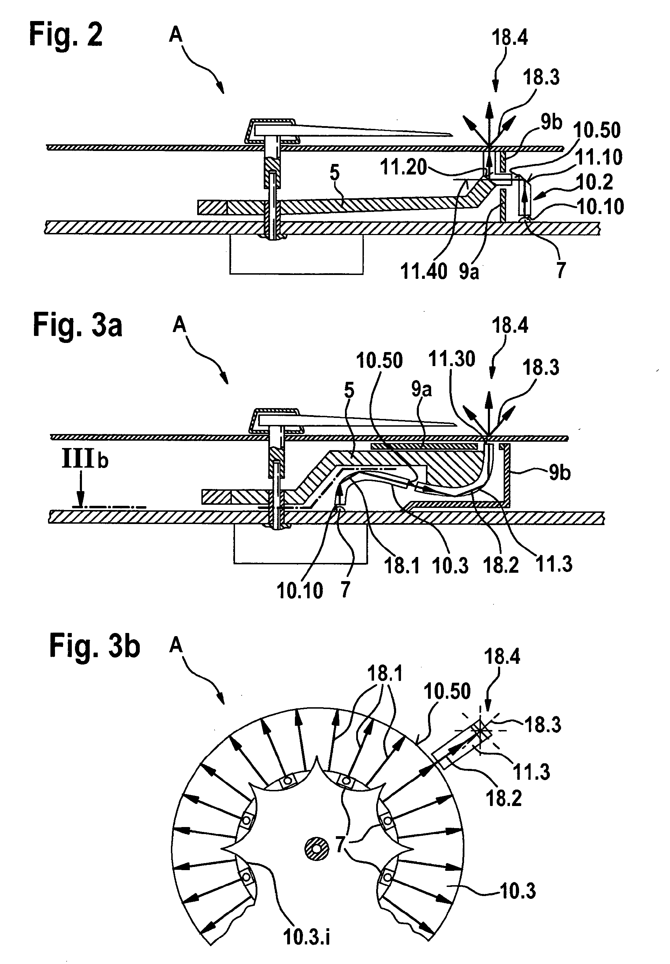

Die Fig. 2 zeigt eine gegenüber der Darstellung in der Fig. 1 dahingehend abgewandelte Ausführungsform einer Anzeigevorrichtung für ein Fahrzeug in Schnittdarstellung, dass die Einkopplung des vom erfindungsgemäß stationär angeordneten Lichtleitkörpers 10 in den mit dem Unterflurzeiger 5 mitbewegten Leuchtkörper 11 radial erfolgt, in dieser Ausführungsform radial von außen nach innen. Die weitere Funktionalität kann gleich sein, wie bereits oben zu den Fig. 1 und 1a ausführlich dargelegt. Bezüglich der Nummerierung des sich mit dem Unterflurzeigers 5 mitbewegenden Leuchtkörpers 11 wurde jeweils unter Bezug auf die entsprechende Figur eine entsprechende Kommastelle an die Position 11 angehängt, wie z.B. 11.1 für den Leuchtkörper in der Ausführungsform der Fig. 1, 11.2 für den Leuchtkörper in der Ausführungsform der Fig. 2 usw. Gleiches gilt für den Lichtleitkörper 10.

Die Fig. 3 zeigt eine gegenüber der Fig. 2 dahingehend abgewandelte Ausführungsform, dass der stationär angeordnete Lichtleitkörper 10.3 hier so ausgebildet und bezüglich eines sich mit dem Unterflurzeiger 5 mitbewegenden Leuchtkörpers 11.3 so ausgerichtet ist, dass hiermit eine wiederum radiale, in diesem Fall radial auswärts gerichtete Einstrahlung erfolgt.

Sowohl der stationär angeordnete Lichtleitkörper 10.3 als auch der sich mit dem Unterflurzeiger 5 mitbewegende Leuchtkörper 11 weisen in dieser Ausführungsform gekrümmte Lichtführungen auf, in denen sich die Lichtstrahlen 18.1 bzw. 18.2 an den betreffenden Reflexionsflächen an der Innenseite so reflektieren, dass sie durch die Lichtleitfunktion dieser beiden Elemente möglichst verlustfrei bis zum Austritt an der Licht-Austrittsfläche 11.30 gelenkt werden, um hierdurch den jeweils entsprechenden analogen Wert über die Anzeigevorrichtung durch den Lichtpunkt 18.4 darstellen zu können.

Die Darstellung der Fig. 3b zeigt den stationären Lichtleiter 10.3 sowie den am hier nicht dargestellten Unterflurzeiger 5 angeordneten Leuchtkörper 11.3 in Draufsichtansicht. Der Lichtleitkörper 10 ist hierbei wiederum ringförmig bzw. ringabschnittsförmig ausgebildet. In seiner äußeren Kontur bildet er dementsprechend einen Kreis- bzw. Kreisabschnitt aus. In seiner Innenkontur ist er mit mehreren aneinander gereihten kreisabschnittförmigen Bereichen 10.3.i versehen, denen ihrerseits jeweils eine eigene Lichtquelle 7 zugeordnet ist. Hierdurch kann wiederum eine im Wesentlichen gleichmäßige Lichtverteilung um den gesamten vom stationär angeordneten Lichtleitkörper 10 versorgten Bereich der Anzeigevorrichtung erreicht werden. Symbolisch sind hierzu im Lichtleitkörper 10 die Lichtstrahlen 18.1 radial abgehend dargestellt, von welchen einer als Lichtstrahl 18.2 von der Licht-Auskoppelfläche 10.50 in den Leuchtkörper 11.3 eingekoppelt und weiter als Lichtpunkt 18.4 mit davon ausgehenden Lichtstrahlen 18.3 symbolisch dargestellt ist. Zur Versorgung dieser Ausführungsform einer Anzeigevorrichtung mit Licht sind hierbei beispielhaft sechs LEDs 7 vorgesehen.

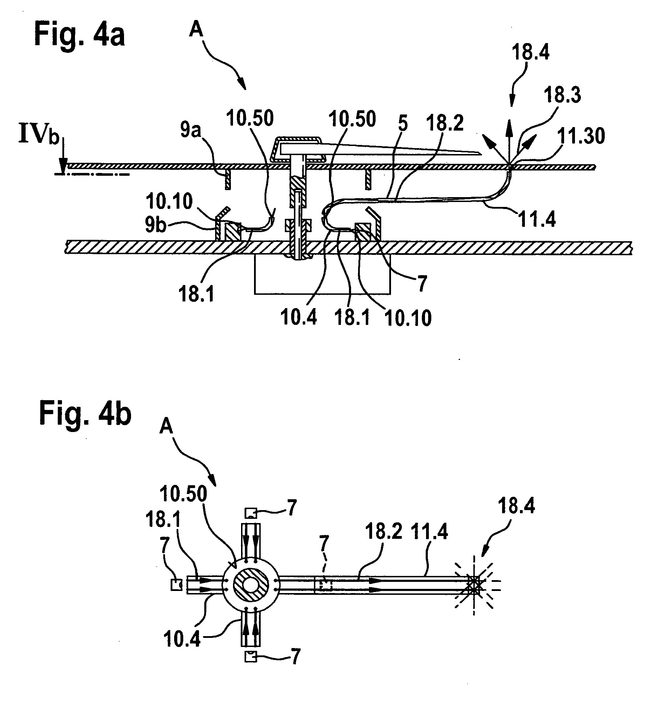

Die Fig. 4a zeigt eine Schnittdarstellung einer Anzeigevorrichtung, welche jedoch im Gegensatz zur Ausführungsform in den Fig. 3a und 3b eine radial nach innen gerichtete Abstrahlung von der als Lichtquelle dienenden LED 7 auf den stationär angeordneten Lichtleitkörper 10.4 zeigt. Der Lichtleitkörper 10.4 ist in der Art eines etwa ringförmigen Flansches ausgebildet und um die Achse der beiden Zeiger 4,5 herum mit seiner ortsfest positionierten Einkoppelfläche 10.10 stationär angeordnet.

Bei dieser Ausführungsform ist der Leuchtkörper 11 so am Unterflurzeiger 5 angeordnet, dass sie mit ihm eine gemeinsame Einheit ausbilden. Das heißt, im Unterflurzeiger 5 ein Lichtleiter 11.4 so integriert, dass dessen Licht-Austrittsfläche 11.30 gleichzeitig das äußere Ende des Unterflurzeigers 5 darstellt. In der Draufsicht auf die Anzeigevorrichtung wird der durch den Leuchtkörper 5 anzuzeigende, analoge Wert durch den an der Licht-Austrittsfläche 11.30 sichtbaren Lichtpunkt 18.4 visualisiert.

Die Fig. 4b zeigt eine Draufsicht auf den stationär angeordneten Lichtleitkörper 10.4 und den Leuchtkörper 11.4, entsprechend der Ansicht entlang des Schnitts 4b in der Fig. 4a. In dieser Ausführungsform ist die kreisförmige Konturierung des stationär angeordneten Lichtleitkörpers 10 gut erkennbar. Sie ist vollkommen geschlossen und aufgrund ihrer nahen Anordnung zur Achse der beiden Zeiger im Vergleich zu den Ausführungsformen 3a und 3b sehr kompakt. Hierdurch ergibt sich für diese Ausführungsform eine vergleichsweise höhere Lichtdichte, so dass dadurch auch mit einer geringeren Anzahl von Lichtquellen 7 eine ausreichende Beleuchtung der Lichtpunktes 18.4 erzielt werden kann. Als Beispiel sind daher in der Fig. 4b lediglich vier LEDs als Lichtquellen 7 im Gegensatz zu den sechs in den Fig. 3b dargestellt.

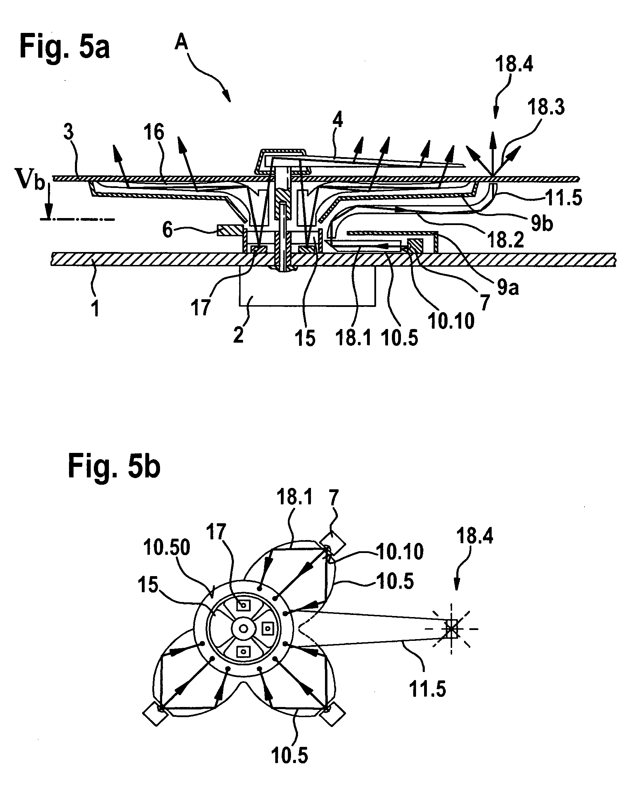

Die Fig. 5a zeigt eine weitere Ausführungsform in Schnittdarstellung, bei der auch eine integrierte Beleuchtung für den Zeiger 4 und das Zifferblatt 3 vorgesehen ist. Als Lichtquelle dient hierbei die LED 17 und der Lichtleiter 16 zur Durchleitung des von ihr erzeugten Lichtes zum Zifferblatt 3 bzw. zum Zeiger 4.

Zur Vermeidung einer Einkopplung von Streulicht in den Anzeigepunkt 18.4 sind hierbei die beiden Blendenelemente 9a und 9b entsprechend weit ins Innere des Anzeigenelementes hinein ausgeformt, um den Leuchtkörper 11 möglichst gut zu schützen.

Die Fig. 5b zeigt eine Draufsicht entsprechend des Schnittes 5b in der Fig. 5a, in welcher neben den bereits oben beschriebenen Elementen im Weiteren eine durchleuchtete Nabe 15 dargestellt ist. Im Lichtleitkörper 10.5 ist der Verlauf der Lichtstrahlen 18.1 radial von außen nach innen verlaufend dargestellt. Die Lichtleitung im Leuchtkörper 11 entspricht im Wesentlichen dem in der Ausführungsform der Fig. 4a und 4b.

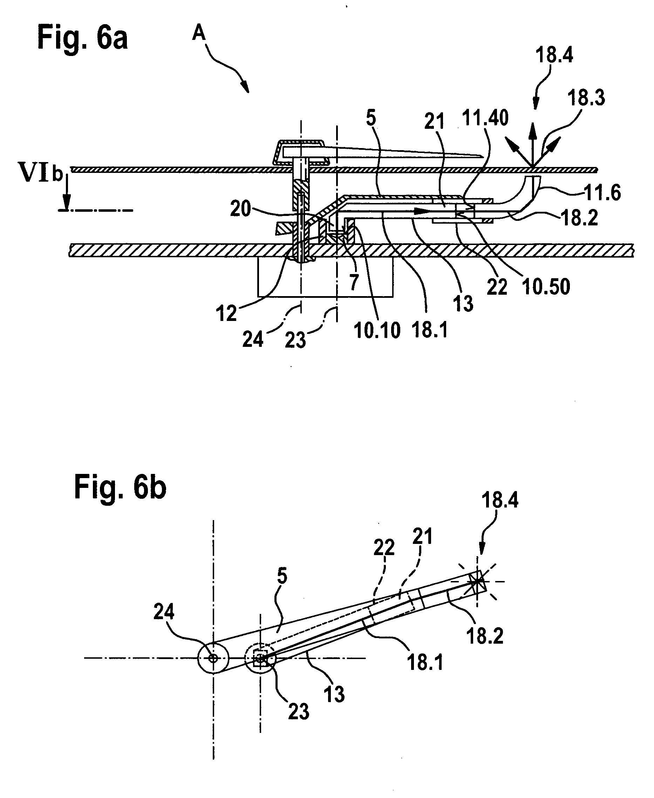

Die Fig. 6a zeigt eine gegenüber den bisher beschriebenen Ausführungsformen dahingehend abgewandelte Anzeigevorrichtung, dass anstelle des stationär angeordneten und ortsfesten Lichtleitkörpers 10 ein stationär angeordneter, aber drehbar in einer Aufnahme 12 gelagerter Lichtleiter 13 zur Einspeisung von Licht in den am Unterflurzeiger 5 angeordneten und sich mit diesem mitbewegenden Leuchtkörper 11 vorgesehen ist.

Weiter gemeinsam ist sowohl den bisher beschriebenen Ausführungsformen als auch dieser eine ortsfest positionierte Lichteinkoppelfläche 10.10, die zur Einkopplung des von der LED 7 erzeugten Lichts in den betreffenden Lichtleitkörper dient. Im vorliegenden Fall ist sie zwar drehbar gelagert, ihre Ebene ist jedoch aufgrund der Fixierung des Abschnittes 20 durch die hier beispielhaft als Hülse dargestellte Lagerung des Lichtleitkörpers 13 ortsfest positioniert.

Um eine Einkopplung in den mit dem Unterflurzeiger 5 mitbewegten Leuchtkörper 11.6 zu ermöglichen, ist das dem Ende 20 gegenüberliegende Ende 21 des Lichtleitkörpers 13 in einer am Unterflurzeiger 5 angeordneten Schleppaufnahme 22 gehalten. Diese Halterung ermöglicht eine sowohl axiale als auch in einem gewissen Schwenkwinkel rotatorisch frei bewegliche Fixierung des Lichtleitkörpers 13. Dies ermöglichst eine Verschwenkung des Unterflurzeigers 5 um seine Zeigerachse 24 gegenüber der exzentrischen Lagerung 23 des Lichtleitkörpers 13, und damit eine Überdeckung eines möglichst großen Schwenkbereichs.

Das axiale Spiel zwischen der Lichtauskoppelfläche 10.50, des Lichtleitkörpers 13 und der ihr stirnseitig zugewandten Einkoppelfläche 11.40 ist durch den in der Fig. 6a dazwischen liegenden Abstand symbolisch gezeigt. Das winkelige Spiel dieser Schleppaufnahme 22 gegenüber dem von ihm aufgenommenen Ende 21 des Lichtleitkörpers 13 ist durch die sich keilförmig nach innen hin aufweitende Außenkontur der Aufnahme 22 in der Draufsicht der Fig. 6b symbolisch dargestellt.

Durch diese Anordnung kann eine besonders effektive Einkopplung des Lichts in den mit dem Unterflurzeiger mit bewegten, als passiver Leuchtkörper ausgebildeten Lichtleiter erfolgen. Durch die zur Zeigerachse leicht exzentrische Anordnung kann der Lichtleitkörper 13 vom Unterflurzeiger 5 mitgeschleppt werden, wobei für die Lichtversorgung lediglich eine einzige LED 7 erforderlich ist. Die flöckige Abdeckung des Zifferblattes 3 durch die Bewegung des Unterflurzeigers 5 ist hierbei durch einen von ihm überstrichenen Winkel ca. 270° bis 280° für die meisten Anwendungsfälle mehr als ausreichend, insbesondere wenn es sich um die Darstellung von Tempomat-Marken handelt.

Im Weiteren ist es grundsätzlich auch möglich, dass der Unterflurzeiger derart gestaltet ist, dass Licht zur Hinterleuchtung des Zifferblattes 3 im Wesentlichen ohne Wechselwirkung mit Licht zur Beleuchtung der Marke hindurchtreten kann, z.B. als Lichtleiter mit Rechteckquerschnitt.

## Patentansprüche

1. Anzeigevorrichtung für ein Fahrzeug, mit einem Zifferblatt (3) und einem in Draufsicht auf die Anzeigevorrichtung in einer hinter dem Zifferblatt liegenden Ebene angeordneten Zeiger (5), wobei ein Lichtleitkörper (10, 13) zur Weiterleitung von Licht aus einer stationären Lichtquelle (7) vorgesehen ist, **gekennzeichnet durch** einen am Zeiger (5) angeordneten und sich mit ihm mitbewegenden Leuchtkörper (11), wobei der Lichtleitkörper (10) zur Einspeisung von Licht in den Leuchtkörper (11) stationär angeordnet ist.

2. Anzeigevorrichtung nach einem der vorangehenden Ansprüche, **dadurch gekennzeichnet, dass** der Lichtleitkörper (10) im Wesentlichen ringförmig oder ringabschnittsförmig ausgebildet ist.

3. Anzeigevorrichtung nach einem der vorangehenden Ansprüche, **dadurch gekennzeichnet, dass** eine Licht-Auskoppelfläche (10.50) des Lichtleitkörpers (10) im Wesentlichen ringförmig oder ringabschnittsförmig ausgebildet ist.

4. Anzeigevorrichtung nach einem der vorangehenden Ansprüche, **dadurch gekennzeichnet, dass** eine Aufnahme (12) zur drehbaren Lagerung eines die ortsfest positionierte Licht-Einkoppelfläche (10.10) aufweisenden Abschnitts (20) des Lichtleitkörpers (13) vorgesehen ist.

5. Anzeigevorrichtung nach Anspruch 4, **dadurch gekennzeichnet, dass** die Aufnahme (12) exzentrisch zur Drehachse eines primären Zeigers (4) der Anzeigevorrichtung angeordnet ist.

6. Anzeigevorrichtung nach einem der vorangehenden Ansprüche, **dadurch gekennzeichnet, dass** der Leuchtkörper (11) eine dem Ziffernblatt (3) und/oder einem Tubenring (19) zugeordnete Licht-Auskoppelfläche (11.30) aufweisen.

7. Anzeigevorrichtung nach einem der vorangehenden Ansprüche, **dadurch gekennzeichnet, dass** ein von der Licht-Auskoppelfläche (11.30) abgegebener Lichtstrahl einen im Wesentlichen punktförmig konturierten Querschnitt aufweist.

8. Anzeigevorrichtung nach einem der vorangehenden Ansprüche, **dadurch gekennzeichnet, dass** eine Streulichtblende (9) vorgesehen ist.

9. Anzeigevorrichtung nach einem der vorangehenden Ansprüche, **dadurch gekennzeichnet, dass** der Unterflurzeiger derart gestaltet ist, dass Licht zur Hinterleuchtung des Zifferblattes (3) im Wesentlichen ohne Wechselwirkung mit Licht zur Beleuchtung der Marke hindurchtreten kann.

## Claims

1. Indicating device for a vehicle, comprising a dial plate (3) and a pointer (5) which, in a plan view of the indicating device, is arranged in a plane located behind the dial plate, a light-guide body (10, 13) for forwarding light from a stationary light source (7) being provided, **characterized by** an illuminating body (11) arranged on the pointer (5) and moving together with the latter, wherein the light-guide body (10) for feeding light into the illuminating body (11) is arranged in a stationary manner.

2. Indicating device according to one of the preceding claims, **characterized in that** the light-guide body (10) is formed substantially in the shape of a ring or in the shape of a section of a ring.

3. Indicating device according to one of the preceding claims, **characterized in that** a light output coupling surface (10.50) of the light-guide body (10) is formed substantially in the shape of a ring or in the shape of a section of a ring.

4. Indicating device according to one of the preceding claims, **characterized in that** a holder (12) is provided for the rotatable mounting of a section (20) of the light-guide body (13) that has the light input coupling surface (10.10) positioned in a fixed location.

5. Indicating device according to Claim 4, **characterized in that** the holder (12) is arranged eccentrically with respect to the axis of rotation of a primary pointer (4) of the indicating device.

6. Indicating device according to one of the preceding claims, **characterized in that** the illuminating body (11) has a light output coupling surface (11.30) assigned to the dial plate (3) and/or a tube ring (19).

7. Indicating device according to one of the preceding claims, **characterized in that** a beam of light output by the light output coupling surface (11.30) has a cross section contoured substantially in point form.

8. Indicating device according to one of the preceding claims, **characterized in that** a scattered-light aperture stop (9) is provided.

9. Indicating device according to one of the preceding claims, **characterized in that** the subsurface indicator is configured in such a way that light for backlighting the dial plate (3) can pass through substantially without any interaction with light for illuminating the marker.

## Revendications

1. Dispositif d'affichage pour un véhicule, avec un cadran (3) et un pointeur (5) disposé en vue en élévation sur le dispositif d'affichage dans un plan reposant derrière le cadran, un corps lumino-conducteur (10, 13) étant prévu pour transmettre de la lumière provenant d'une source lumineuse (7) stationnaire, **caractérisé par** la présence d'un corps d'éclairage (11) disposé au niveau du pointeur (5) et se déplaçant avec lui, le corps lumino-conducteur (10) étant disposé de façon stationnaire pour amener la lumière dans le corps d'éclairage (11).

2. Dispositif d'affichage selon l'une quelconque des revendications précédentes, **caractérisé en ce que** le corps lumino-conducteur (10) est réalisé pour l'essentiel en forme d'anneau ou de section d'anneau.

3. Dispositif d'affichage selon l'une quelconque des revendications précédentes, **caractérisé en ce qu'**une surface de découplage de lumière (10.50) du corps lumino-conducteur (10) est réalisée pour l'essentiel en forme d'anneau ou de section d'anneau.

4. Dispositif d'affichage selon l'une quelconque des revendications précédentes, **caractérisé en ce qu'**un logement (12) est prévu pour le positionnement pivotant d'une section (20) du corps lumino-conducteur (13) comportant la surface de couplage de lumière (10.10) positionnée fixement sur place.

5. Dispositif d'affichage selon la revendication 4, **caractérisé en ce que** le logement (12) est disposé de façon excentrée par rapport à l'axe de rotation d'un pointeur (4) principal du dispositif d'affichage.

6. Dispositif d'affichage selon l'une quelconque des revendications précédentes, **caractérisé en ce que** le corps d'éclairage (11) comporte une surface de découplage de lumière (11.30) associée au cadran (3) et/ou à une bague tubulaire (19).

7. Dispositif d'affichage selon l'une quelconque des revendications précédentes, **caractérisé en ce qu'**un faisceau lumineux transmis par la surface de découplage de lumière (11.30) comporte une section transversale contourée pour l'essentiel en forme de point.

8. Dispositif d'affichage selon l'une quelconque des revendications précédentes, **caractérisé en ce qu'**un cache de lumière diffuse (9) est prévu.

9. Dispositif d'affichage selon l'une quelconque des revendications précédentes, **caractérisé en ce que** l'indicateur d'encastrement est réalisé de telle sorte que la lumière servant au rétroéclairage du cadran (3) peut traverser pour l'essentiel sans interaction avec la lumière servant à l'éclairage de la marque.
